# EUROPEAN PATENT APPLICATION

(11) **EP 2 484 715 A1**
(43) Date of publication of application: **08.08.2012**
(21) Application number: 10818911.9
(22) Date of filing: 27.09.2010
(51) Int. Cl.: C08J 5/24, B29C 43/12, B29C 43/34, B32B 27/26, B32B 27/38, C08G 59/72, B29K 105/08, B29L 9/00

(54) **FIBER-REINFORCED COMPOSITE MATERIAL**

(30) Priority: 28.09.2009 JP 2009222073; 30.09.2009 JP 2009227153
(71) Applicant: Mitsubishi Rayon Co., Ltd., Minatoku Tokyo 108-8506 (JP)
(72) Inventor: KANEKO, Manabu, Toyohashi-shi Aichi 440-8601 (JP); ISHIMOTO, Tomoko, Toyohashi-shi Aichi 440-8601 (JP); USAMI, Kaori, Toyohashi-shi Aichi 440-8601 (JP)
(74) Representative: HOFFMANN EITLE
(86) International application number: PCT/JP2010/066732
(87) International publication number: WO 2011/037239

(57) **Abstract**

A prepreg comprising an epoxy resin (A), a boron chloride-amine complex (B) and a fiber base material (C) is used. Preferably, the molar ratio of boron in the boron chloride-amine complex (B) is 4-7 mol% with respect to the number of moles of epoxy groups in the epoxy resin (A), and the epoxy resin (A) includes a bifunctional epoxy resin with an oxazolidone ring structure, a bisphenol-type epoxy resin and a phenol-novolac-type epoxy resin.

## Description

### Technical Field

The present invention relates to a prepreg, to a fiber-reinforced composite material obtained by curing it, and a method for producing it.

### Background Art

Fiber-reinforced composite materials, due to their light weight, high strength and high rigidity, are used for a wide range of purposes from sports and leisure to industrial purposes such as automobiles and aircrafts. In recent years, in particular, carbon fiber-reinforced composite materials with lighter weight, higher strength and higher rigidity have come to be used more often for industrial purposes.

Among the industrial uses, carbon fiber-reinforced composite materials used in structural members of train cars and aircraft frames commonly employ prepregs as intermediate materials, and are produced by autoclave molding. This is designed to reduce voids in molded articles by molding under high pressure using an autoclave, and to exhibit the expected properties of the molded article.

However, not only is it difficult to newly acquire autoclave equipment due to its extremely high cost, but once obtained, the sizes of molded articles are restricted by the size of the autoclave and it becomes impossible in practice to produce larger molded articles. Active efforts are underway toward development of out-of-autoclave and low-cost molding, in order to counter these problems, and typical examples are oven molding (or vacuum bag molding) or RFI molding, whereby molding is performed only at low pressure such as a vacuum or atmospheric pressure. Since oven molding or RFI molding do not apply pressure beyond atmospheric pressure, it is not necessary to use a strong pressure-resistant vessel such as an autoclave, and molding can be accomplished only with a furnace (oven) that allows increase in temperature, so that molding is possible with simple equipment such as a thermal insulating board and a hot air heater. However, since pressure is not applied, voids tend to remain in the molded articles, and such molded articles have had low strength compared to molded articles in autoclaves, or have had pinholes formed on the surface.

Patent document 1 describes a molded article with low voids, using a partially impregnated prepreg. There is also disclosed in Patent document 1 a method of forming a molded article with low voids by using a prepreg that is partially impregnated with a resin.

However, using such a partially impregnated prepreg has been problematic, in that the original heat resistance of the matrix resin composition cannot be obtained with the molded article. The glass transition point (Tg) of the molded article is lower than the Tg of the cured product of the matrix resin composition alone. This problem becomes prominent with prepregs having reinforcing fibers with a high basis weight, which are selected due to demand for low cost.

A common method for solving the problem of pinholes is one that includes holding for a fixed time in a vacuum at a temperature below the curing temperature of the prepreg, and then raising the temperature to the curing temperature for curing, thereby removing internal air bubbles and producing a molded article with low voids. This temperature holding before curing is commonly referred to as dual curing. However, in cases that are unsuitable for dual curing during molding, it is not possible to remove the voids on the surface, and defects are created in the surface appearance.

Molded sandwich structures employing fiber-reinforced composite materials as skin materials have high rigidity and are also widely used. For example, Patent document 2 discloses a method that allows easy production of a laminated sheet with high strength and high rigidity, using a carbon fiber woven fabric.

Recent years have seen an increase in the uses of molded sandwich structures employing fiber-reinforced composite materials as skin materials, including production of light-weight, high-strength and high-rigidity laminated sheets, as well as applications for exterior parts. However, molded articles of fiber-reinforced composite materials, wherein commonly used dicyandiamides are employed as curing agents, have had troubles such as white spots on the surface. Even if white spots are not present immediately after molding, white spots may sometimes appear upon contact with cold water or hot water over time, and this disadvantage becomes particularly prominent when a molded sandwich structure is formed.

Dicyandiamide is a white solid and, tending to aggregate and being resistant to dissolution, it causes white spots. Therefore, white spots can be ameliorated by reducing the amount of dicyandiamide used or by using a transparent liquid curing agent such as imidazole, but these methods have disadvantages such as low heat resistance or a relatively short pot life, and reduced manageability.

### Prior Art Reference

### Patent Document

Patent document 1: Japanese Patent Public Inspection No. 2003-513110
Patent document 2: Japanese Unexamined Patent Publication No. 2004-58609

### Summary of the Invention

It is an object of the present invention to provide a prepreg that allows the original heat resistance of the resin to be exhibited, regardless of the molding method, and a fiber-reinforced composite material obtained by curing it.

As a result of diligent research directed toward solving the problems described above, the present inventors have completed this invention upon finding that the problems can be solved by using a boron chloride-amine complex as the curing agent in the prepreg.

That is, the gist of the invention is a prepreg comprising an epoxy resin (A), a boron chloride-amine complex (B) and a fiber base material (C), as well as a fiber-reinforced composite material obtained by curing it.

According to the invention, the molar ratio of boron in the boron chloride-amine complex (B) with respect to the number of moles of epoxy groups in the epoxy resin

### (A) is preferably 4-7 mol%.

Also preferably, the epoxy resin (A) comprises a bifunctional epoxy resin with an oxazolidone ring structure represented by the following formula (I) (1), a bisphenol-type epoxy resin (2) and a phenol-novolac-type epoxy resin represented by the following formula (II) (3).

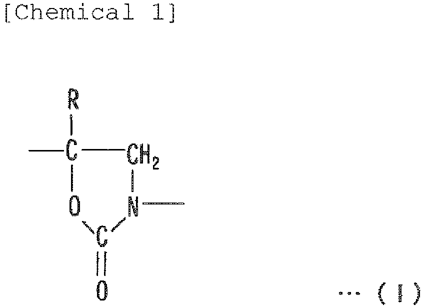

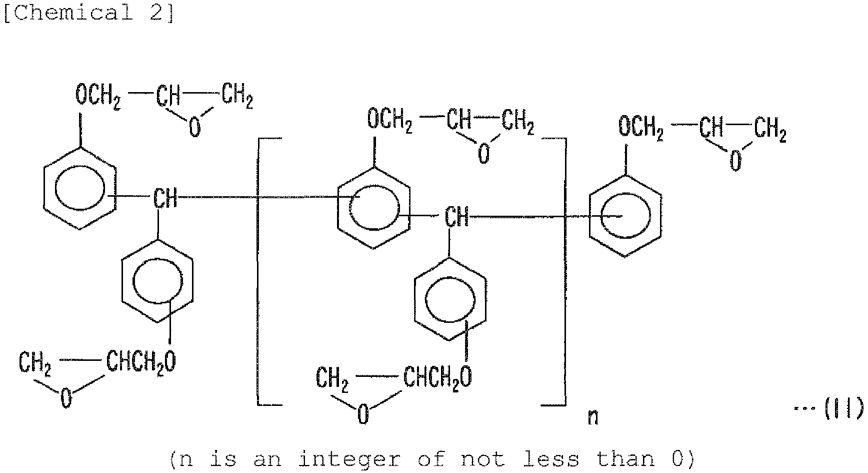

According to the invention it is possible to provide a prepreg that exhibits desired heat resistance regardless of the molding method, and it is possible to reduce molding costs and molding equipment investment for fiber-reinforced composite materials.

It is another object of the invention to provide a method for producing a fiber-reinforced composite material that allows the original heat resistance of the resin composition to be exhibited without defects in the surface appearance, especially in oven molding.

As a result of diligent research on this problem as well, the present inventors have completed this invention upon finding that the problem can be solved by dual curing in a specific temperature range before curing, when molding a prepreg comprising a resin composition that includes an epoxy resin (A) and a boron chloride-amine complex (B), and a fiber base material (C).

That is, the gist of the invention is a method for producing a fiber-reinforced composite material, which comprises holding a prepreg comprising a resin composition, that includes an epoxy resin (A) and a boron chloride-amine complex (B), and a fiber base material (C), at 60°C-95°C for 0.5-1.5 hours during its molding, and then curing it at the curing temperature of the resin composition.

Preferably for this invention, the epoxy resin (A) comprises a bifunctional epoxy resin with an oxazolidone ring structure represented by formula (I) (1), a bisphenol-type epoxy resin (2) and a phenol-novolac-type epoxy resin represented by formula (II) (3).

According to this production method of the invention, it is possible to obtain a fiber-reinforced resin composite material that has a satisfactory outer appearance and allows the original heat resistance of the resin composition to be exhibited.

It is another object of the invention to provide a molded sandwich structure without white spots on the surface.

As a result of diligent research on this problem as well, the present inventors have completed this invention upon finding that the problem can be solved by using a boron chloride-amine complex as the curing agent.

Specifically, the gist of this invention is a molded sandwich structure comprising a skin material obtained by curing a prepreg comprising an epoxy resin (A), a boron chloride-amine complex (B) and a fiber base material (C), and a core material, and also a method for producing a molded sandwich structure which comprises laminating a core material and a prepreg comprising an epoxy resin (A), a boron chloride-amine complex (B) and a reinforcing fiber base material (C), and then hot pressing it to cure the prepreg.

According to this invention, it is possible to provide a molded sandwich structure without occurrence of white spots on the surface even when wetted with water. The molded sandwich structure is useful as a member having both excellent physical properties and an excellent outer appearance.

### Brief Description of the Drawings

Fig. 1 is a diagram illustrating a method for producing a panel of a fiber-reinforced composite material of the invention, which is a cross-sectional view of an example of a bagging structure.
Fig. 2 is a cross-sectional view showing an example of the structure of bagging for production of a molded sandwich structure of the invention.

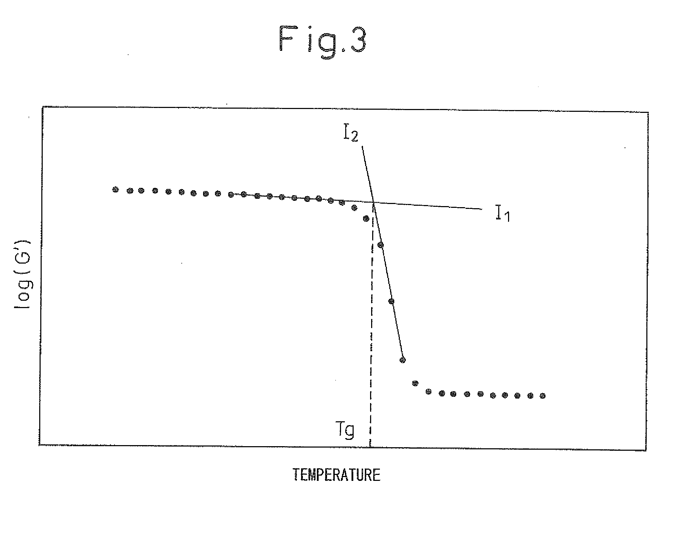

Fig. 3 is a graph showing an example of determining G'-Tg from the intersection between an approximate straight line in the flat region before transition of logG' of the cured product, and an approximate straight line on the region of transition of logG'.

### Modes for Carrying Out the Invention

Preferred embodiments of the invention will now be explained with the understanding that the invention is not limited only to these, and various modifications may be implemented such as are within the spirit and scope of the invention.

### Epoxy resin (A)

Various known epoxy resins may be used as epoxy resin (A) for use according to the invention, and there are no particular restrictions on the molecular structure or molecular weight so long as there are at least 2 epoxy groups in the molecule. For example, there may be used various bisphenol-type, phenol-novolac-type, cresol-novolac-type, dicyclopentadiene-type, naphthalene-type, biphenyl-type and oxazolidone-type epoxy resins, either alone or in combinations of 2 or more. If necessary, a monofunctional epoxy resin, vinyl polymerizable resin, phenol resin, bismaleimide resin, BT resin, cyanate ester resin, vinyl ester resin, benzoxazine resin, unsaturated polyester resin or the like may be added as well. Preferred epoxy resins are oxazolidone-type resins, bisphenol-type resins and phenol-novolac-type resins.

A preferred epoxy resin combination is a combination of a bifunctional epoxy resin having an oxazolidone ring structure represented by formula (I) above (1), a bisphenol-type epoxy resin (2), and a phenol-novolac-type epoxy resin represented by formula (II) above (3).

Bifunctional epoxy resins having an oxazolidone ring structure represented by formula (I) (1) are commercially available, and for example, AER4152 or XAC4151 by Asahi Kasei Chemicals Corp. may be mentioned.

The bisphenol-type epoxy resin (2) may be a bisphenol A-type resin, bisphenol F-type resin, bisphenol S-type resin, or the like. Preferred are bisphenol A-type resins and bisphenol S-type resins. These are readily available on the market.

Phenol-novolac-type epoxy resins represented by formula (II) (3) are also commercially available, and for example, EPPN-501H, EPPN-502HY and EPPN-502H by Nippon Kayaku Co., Ltd., jER1032H60 by Japan Epoxy Resins Co., Ltd. and Tactix742 by Huntsman Corp. may be mentioned. The epoxy equivalent value is preferably 150-180 g/eq.

The mixing ratios are preferably 20-40 mass% of the bifunctional epoxy resin with an oxazolidone ring structure represented by formula (I) (1), 45-65 mass% of the bisphenol-type epoxy resin (2) and 5-25 mass% of the phenol-novolac-type epoxy resin represented by formula (II) (3), with respect to 100 mass% as the total of the bifunctional epoxy resin with an oxazolidone ring structure represented by formula (I) (1), the bisphenol-type epoxy resin (2) and the phenol-novolac-type epoxy resin represented by formula (II) (3).

If the content of the bifunctional epoxy resin with an oxazolidone ring structure represented by formula (I) (1) is at least 20 mass% there will be no reduction in mechanical properties of the fiber-reinforced composite material, and if it is no greater than 40 mass%, the heat resistance of the fiber-reinforced composite material will be satisfactory. The content of the bifunctional epoxy resin with an oxazolidone ring structure represented by formula (I) (1) is even more preferably 25-35 mass%. If the content of the bisphenol-type epoxy resin (2) is at least 45 mass% the drape property of the prepreg will be ensured, and if it is no greater than 65 mass% the crosslink density of the cured resin will not be excessively reduced and there will be no impairment of the heat resistance. The content of the bisphenol-type epoxy resin (2) is even more preferably 50-60 mass%. The bisphenol-type epoxy resin (2) is more preferably a combination of a bisphenol A-type resin and bisphenol S-type resin, for a high degree of balance between drape property of the prepreg and heat resistance of the fiber-reinforced composite material. If the content of the phenol-novolac-type epoxy resin represented by formula (II) (3) is at least 5 mass% the crosslink density of the cured resin will not be excessively reduced and there will be no impairment of the heat resistance, and if it is no greater than 25 mass% there will be no impairment of the mechanical properties of the fiber-reinforced composite material. The content of the phenol-novolac-type epoxy resin (3) is even more preferably 10-20 mass%.

### Boron chloride-amine complex (B)

According to the invention, a boron chloride-amine complex (B) is used as a curing agent. By using a boron chloride-amine complex (B) it is possible to provide a prepreg that exhibits the original heat resistance of the matrix resin, without being affected by the prepreg producing method or form, or the fiber-reinforced composite material molding method. In addition, no white spots appear on the surface of the molded sandwich structure that is obtained using the fiber-reinforced composite material.

The boron chloride-amine complex (B) may be obtained as a commercially available product. The preferred content for the boron chloride-amine complex (B) is an amount for a molar ratio of 4-7 mol% of the boron atoms in the boron chloride-amine complex (B) with respect to the number of moles of epoxy groups, calculated from the epoxy equivalents of the epoxy resin (A). Such a range is preferred as it will allow excellent heat resistance to be exhibited by the obtained prepreg.

A thermoplastic resin may be added to the matrix resin comprising the epoxy resin (A) used for the invention and the boron chloride-amine complex (B) used as the curing agent. Examples of such thermoplastic resins include polyamides, polyesters, polycarbonates, polyethersulfones, polyphenylene ethers, polyphenylene sulfides, polyetherether ketones, polyimides, polytetrafluoroethylene, polyethers, polyolefins, liquid crystal polymers, polyallylates, polysulfones, polyacrylonitrile-styrene, polystyrenes, polyacrylonitriles, polymethacrylates, ABS, AES, ASA, polyvinyl chloride, polyvinyl formal, phenoxy resins, and the like. Preferred thermoplastic resins include polyvinyl formals, phenoxy resins and polyethersulfones. Phenoxy resins are more preferred. If necessary, various known additives may also be used in the matrix resin comprising the epoxy resin (A) used for the invention and the boron chloride-amine complex (B) used as the curing agent. For example, there may be used various curing accelerators, release agents such as silicone oils, natural waxes, synthetic waxes, straight-chain fatty acid metal salts, acid amides, esters and paraffins, powders or glass fibers of crystalline silica, molten silica, calcium silicate, alumina, calcium carbonate, talc and barium sulfate, inorganic fillers such as carbon fibers, flame retardants such as chlorinated paraffin, bromotoluene, hexabromobenzene and antimony trioxide, coloring agents such as carbon black and red iron oxide, and silane coupling agents or the like.

### Fiber base material (C)

The fiber base material (C) useful for the invention may be reinforcing fibers commonly used in fiber-reinforced composite materials. Examples include carbon fibers, graphite fibers, aramid fibers, silicon carbide fibers, alumina fibers, boron fibers, high-strength polyethylene fibers, tungsten carbide fibers, PBO fibers and glass fibers, which may be used alone or in combinations of 2 or more. Carbon fibers are preferred. The fiber base material (C) can be used directly in the form of the tow, in the form of a unidirectional material having the reinforcing fiber tow aligned in one direction, in the form of a woven fabric, or in the form of a nonwoven fabric comprising short-cut reinforcing fibers. For a woven fabric, examples include sheets with fiber bundles aligned in one direction, such as plain weave, twill weave, satin weave or non-crimp fabrics, or stitching sheets obtained by forming sheets with varied lamination angles, stitched together without looseness. A unidirectional material is preferred for excellent mechanical properties of the obtained fiber-reinforced composite material. A woven fabric is also preferred from the viewpoint of manageability. According to the invention, there are no restrictions on the basis weight of the reinforcing fibers used, but a larger fiber basis weight will allow superior performance to be exhibited.

The prepreg of the invention can be produced by a common method, without any particular restrictions on the production method. A matrix resin composition can be prepared using a glass flask, a kneader, a planetary mixer, a common stirring/heating kiln, a stirring/pressing/heating kiln, or the like. The method of impregnating the matrix resin into the fiber base material may be a hot-melt film method, lacquer method, or the like.

The method for molding the prepreg of the invention, i.e. the method for producing the fiber-reinforced composite material of the invention, is not particularly restricted. There may be employed a common molding method such as an autoclave molding method, an oven molding method, a press molding method, a continuous press molding method, a pultrusion molding method or an internal pressure molding method. The preferred curing temperature is 130°C-200°C. It is more preferably 145°C-185°C.

There are no particular restrictions on the molding machine used in the method of dual curing when the curing temperature is being increased during production of the fiber-reinforced composite material, as a second feature of the invention. An oven, autoclave, pressing machine or the like may be used. An oven is preferred. With an autoclave, pressure may be applied using air or nitrogen. The interior of the laminated body may also be pressed as in internal pressure molding methods. During the molding, the pressure in the die or bag is preferably reduced with a vacuum pump or the like during curing temperature increase or during curing, in order to maximize removal of air bubbles in the prepreg.

In this production method, holding at 60°C-95°C for 0.5 hour-1.5 hours during curing temperature increase (dual curing) can yield a fiber-reinforced resin composite material with no voids on the surface. There is no restriction on the number of times for dual curing so long as the temperature and time are within the aforementioned ranges, but it is preferably carried out only once. When dual curing is to be carried out several times at different temperatures, each dual curing from the 2nd time onward is preferably carried out at a higher temperature than the previous dual curing. If the dual curing temperature is 60°C-95°C, there will be no reduction in the original heat resistance of the resin composition. If the dual curing time is 0.5 hour-1.5 hours, the flow volume of the resin will be suitable, and it will be possible to obtain a satisfactory outer appearance since air bubbles in the prepreg will be removed.

Upon completion of dual curing, the temperature is further raised to a temperature at which the resin composition cures, and curing is completed. The curing temperature is preferably in a temperature range in which the resin composition cures. The preferred curing temperature is 130°C-200°C. It is more preferably 145°C-185°C.

There are no particular restrictions on production of the molded sandwich structure and the prepreg to be used in the method for its production, as the third feature of the invention, and a common method such as mentioned above may be used.

In the method for producing a molded sandwich structure according to the third feature of the invention, a core material and prepreg are laminated and then hot pressed for curing of the prepreg, thereby accomplishing molding. There are no particular restrictions on the molding method. There may be employed a common moulding method such as an autoclave molding method, an oven molding method, a press molding method, a continuous press molding method, a pultrusion molding method or an internal pressure molding method. The preferred curing temperature is 130°C-200°C. It is more preferably 145°C-185°C.

The present invention will now be explained in greater detail by examples, with the understanding that the invention is in no way restricted thereby.

### [Examples 1-14 and Comparative Examples 1-4]

Table 1 below shows the resin composition starting materials and fiber materials used in Examples 1-14 and Comparative Examples 1-4.

**[Table 1]**

| Table 1 | | |
|---|---|---|
| | Abbreviated name | Description |
| Material A | AER4152 | Bifunctional epoxy resin with structure of (I) |
| | | "AER4152" by Asahi Kasei Chemicals: epoxy equivalents = 340 g/eq |
| | EPPN-502H | Novolac-type epoxy resin with structure of (II) |
| | | "EPPN-502H" by Nippon Kayaku: epoxy equivalent - 169 g/eq |
| | EXA1514 | Bisphenol-type epoxy resin "EPICLON EXA1514" by DIC: epoxy equivalents = 310 g/eq |
| | jFR828 | "jER828" by Japan Epoxy Resins : epoxy equivalents = 189 g/eq |
| | jER1001 | "JER1001" by Japan Epoxy Resins: epoxy equivalents = 475 g/eq |
| Material B | DY9577 | Boron chloride-amine complex "DY9577" by Huntsman : boron content = 3.6 mass% |
| Material C | TRK510 | Carbon fiber woven fabric "PYROFIL woven fabric TRK510" by Mitsubishi Rayon: Fiber basis weight = 646 g/m² |
| Other | YP-70 | Phenoxy resin, "PHENOTOTO YP-/0" by Tohto Kasei: epoxy equivalents = 14000 g/eq |
| | Dicy15 | Dicyandiamide, "jERCURE Dicy15" by Japan Epoxy Resins |
| | DCMU | Dichlorophenyldimethylurea, "DCMU99" by Hodogaya Chemicals |
| | 2MA-OK | Imidazole, "CURAZOLE 2MA-OK" by Shikoku Chemicals |
| | L-07N | Epoxy-phenol-boric acid ester mixture, "CUREDUCT L-07N" by Shikoku Chemicals |

### Preparation of resin composition A

A master batch was prepared by dissolving jER828 and YP-70 at 160°C. For the master batch, the components other than DY9577 in the composition shown in Table 2 were mixed at 120°C. The mixture was adjusted to 60°C, and then a prescribed amount of DY9577 was added and mixed therewith to prepare resin composition A.

### Preparation of resin composition B

A master batch was prepared by dissolving jER828 and YP-70 at 160°C. A master batch was also prepared by uniformly mixing and dispersing jER828 with Dicy15 and DCMU using a triple roll mill. The components other than the Dicy15/DCMU master batch in the composition shown in Table 2 were mixed with the YP-70 master batch at 100°C.
The mixture was adjusted to 60°C, and then a prescribed amount of the Dicy15/DCMU master batch was added and mixed therewith to prepare resin composition B.

### Preparation of resin composition C

A master batch was prepared by dissolving jER828 and YP-70 at 160°C. A master batch was also prepared by uniformly mixing and dispersing jER828 with 2MA-OK and L-07N using a triple roll mill. The components other than the 2MA-OK/L-07N master batch in the composition shown in Table 2 were mixed with the YP-70 master batch at 100°C. The mixture was adjusted to 60°C, and then a prescribed amount of the 2MA-OK/L-07N master batch was added and mixed therewith to prepare resin composition C.

### Measurement of Tg by DMA

The resin sheet and a fiber-reinforced composite material panel were worked into test pieces (50 mm length x 12 mm width, resin sheet thickness: 2 mm, fiber-reinforced composite material thickness: 2.8 mm). For the fiber-reinforced composite material panel, the test piece was worked so that the lengthwise direction and the reinforcing fiber warp yarn direction matched. The measuring apparatuses used were an RDA700 Rheometer by Rheometrix and an ARES-RDA by TA Instruments. The measuring frequency was 1 Hz, and the temperature-elevating rate was 5°C step elevation for the RDA700 and 5°C/min elevation for the ARES-RDA. The logG' was plotted against temperature, and G'-Tg was recorded as the temperature determined from the intersection between an approximate straight line in the flat region before transition of logG', and an approximate straight line on the region of transition of G'. Also, tanδ was plotted against temperature, and the temperature showing maximum tanδ was recorded as tanδmax. As the difference between the measuring apparatuses, the measured values for G'-Tg and tanδmax by the RDA700 are 1.05-fold higher than the measured values by the ARES-RDA.

### Measurement of Tg by DSC

A Q100 by TA Instruments was used for measurement with the sample in an aluminum pan, with a temperature-elevating rate of 10°C/min.

### Measurement of composite interlaminar shear strength

The interlaminar shear strength of the fiber-reinforced composite material was determined by cutting out a test piece (25 mm length × 6.3 mm width × 2.8 mm thickness) from the fiber-reinforced composite material, with the warp yarn direction of the reinforcing fibers oriented 0° with respect to the lengthwise direction of the test piece, and measuring the interlaminar shear property of the test piece using a universal testing machine by Instron with a 3-point bending jig (indenter: 3.2 mmR, support: 1.6 mm, inter-support distance: 4 × test piece thickness, cross head speed: inter-support distance squared × 0.01/6 × test piece thickness).

### Composite flexural properties

The flexural properties (flexural strength and flexural modulus) were determined by cutting out a test piece (130 mm length × 12 mm width × 2.8 mm thickness) from the fiber-reinforced composite material, with the warp yarn direction of the reinforcing fibers oriented 0° with respect to the lengthwise direction of the test piece, and using a universal testing machine by Instron with a 3-point bending jig (indenter and support: 3.2 mmR, inter-support distance: 40 × test piece thickness, cross head speed: inter-support distance squared × 0.01/6 × test piece thickness) for measurement of the test piece.

### Example 1

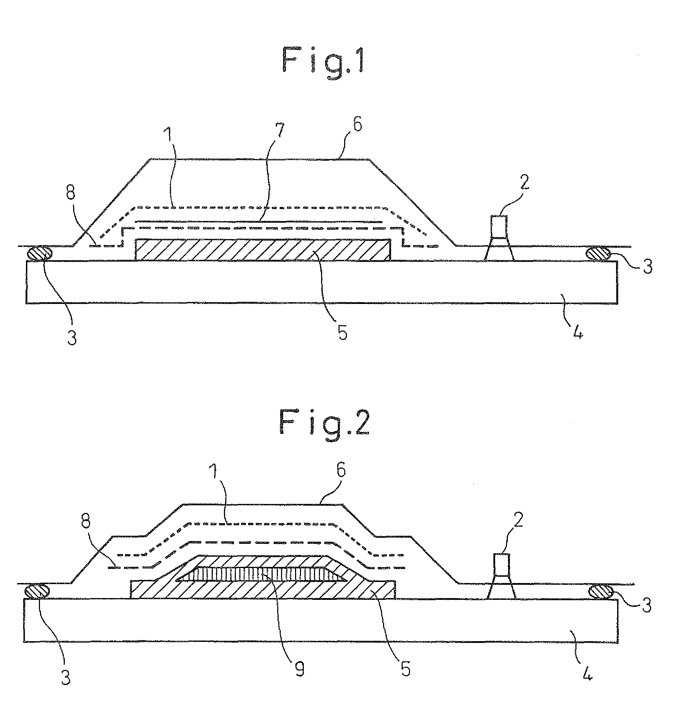

A TRK510 material by Mitsubishi Rayon Co., Ltd. was prepared as the fiber base material. With the basis weight of the resin film set for a resin content of 45 mass% in the prepreg, resin composition A was coated onto a release sheet with a film coater under 60°C conditions, to obtain a resin film. The obtained resin film was attached onto both sides of the fiber base material, and passed through a fusing press (JR-600S, product of Asahi Corp., processing length: 1340 mm, pressure: cylinder pressure) under conditions with a temperature of 40°C, a pressure of 0.05 MPa and a feed rate of 1.6 m/min, to obtain prepreg 1. The resin content of the prepreg was 45 mass%. Upon cutting the obtained prepreg and visually observing the cross-section, interior sections without impregnation of the resin were seen. The obtained prepreg was laminated along the warp yarn direction, and the laminated body was bagged with the construction shown in Fig. 1. Also, a vacuum pump was connected to the pull opening for 4 hours of preliminary deaeration at room temperature. The bagged laminated body was placed in an oven and subjected to heat curing at 150°C for 2 hours with the vacuum pump connected to the pull opening for deaeration, to obtain a panel.
A test piece was cut out from the obtained panel, and the Tg was measured by DMA. The results are shown in Table 2. An RDA700 was used as the measuring apparatus.

Also, resin composition A was heated to 60°C for defoaming, and then resin composition A was sandwiched by two release-treated glass plates via 2 mm-thick spacers, and subjected to heat curing in an oven at 150°C for 2 hours, to obtain a 2 mm-thick cured resin sheet.
A test piece was cut out from the obtained cured resin sheet, and the Tg was measured by DMA. The results are shown in Table 2. An RDA700 was used as the measuring apparatus.

### Comparative Example 1

A TRK510 material by Mitsubishi Rayon Co., Ltd. was prepared as the fiber base material. With the basis weight of the resin film set for a resin content of 45 mass% in the prepreg, resin composition B was coated onto a release sheet with a film coater under 60°C conditions, to obtain a resin film. The obtained resin film was attached by hand onto both sides of the fiber base material, to obtain prepreg 2. The resin content of the prepreg was 45 mass%. Upon cutting the obtained prepreg and visually observing the cross-section, interior sections without impregnation of the resin were seen. The obtained prepreg was laminated along the warp yarn direction, and the laminated body was bagged with the construction shown in Fig. 1. Also, a vacuum pump was connected to the pull opening for 6 hours of preliminary deaeration at room temperature. The bagged laminated body was placed in an oven and subjected to heat curing at 150°C for 2 hours with the vacuum pump connected to the pull opening for deaeration, to obtain a panel.
A test piece was cut out from the obtained panel, and the Tg was measured by DMA. The results are shown in Table 2. An RDA700 was used as the measuring apparatus.

Also, resin composition B was heated to 60°C for defoaming, and then resin composition B was sandwiched by two release-treated glass plates via 2 mm-thick spacers, and subjected to heat curing in an oven at 150°C for 2 hours, to obtain a 2 mm-thick cured resin sheet.
A test piece was cut out from the obtained cured resin sheet, and the Tg was measured by DMA. The results are shown in Table 2. An RDA700 was used as the measuring apparatus.

### Comparative Example 2

A TRK510 material by Mitsubishi Rayon Co., Ltd. was prepared as the fiber base material. With the basis weight of the resin film set for a resin content of 45 mass% in the prepreg, resin composition B was coated onto a release sheet with a film coater under 60°C conditions, to obtain a resin film. The obtained resin film was attached onto both sides of the fiber base material, and passed through a fusing press (JR-600S, product of Asahi Corp., processing length: 1340 mm, pressure: cylinder pressure) under conditions with a temperature of 100°C, a pressure of 0.4 MPa and a feed rate of 1 m/min, to obtain prepreg 3. Upon cutting the obtained prepreg and visually observing the cross-section, it was seen that the resin had impregnated most of the fiber base material. The obtained prepreg was laminated along the warp yarn direction, and the laminated body was bagged with the construction shown in Fig. 1. Also, a vacuum pump was connected to the pull opening for 6 hours of preliminary deaeration at room temperature. The bagged laminated body was placed in an oven and subjected to heat curing at 150°C for 2 hours with the vacuum pump connected to the pull opening for deaeration, to obtain a panel.
A test piece was cut out from the obtained panel, and the Tg was measured by DMA. The results are shown in Table 2. An RDA700 was used as the measuring apparatus.

### Comparative Example 3

The same procedure was carried out as in Comparative Example 1, except that hot molding was conducted using an autoclave instead of an oven, with a pressure of 0.3 MPa and a temperature of 150°C, for 2 hours.
A test piece was cut out from the obtained panel, and the Tg was measured by DMA. The results are shown in Table 2. An RDA700 was used as the measuring apparatus.

### Comparative Example 4

The same procedure was carried out as in Comparative Example 1, except for using resin composition C instead of resin composition B, to obtain prepreg 4 and its panel.
A test piece was cut out from the obtained panel, and the Tg was measured by DMA. The results are shown in Table 2. After heating the obtained resin composition C to 60°C for defoaming, resin composition A was sandwiched by two release-treated glass plates via 2 mm-thick spacers, and subjected to heat curing in an oven at 150°C for 2 hours, to obtain a 2 mm-thick cured resin sheet.
A test piece was cut out from the obtained cured resin sheet, and the Tg was measured by DMA. The results are shown in Table 2. An RDA700 was used as the measuring apparatus.

**[Table 2]**

| Table 2 | | | | | |
|---|---|---|---|---|---|
| | Example 1 | Comp. Ex. 1 | Comp. Ex. 2 | Comp. Ex. 3 | Comp. Ex. 4 |
| | Prepreg 1 | Prepreg 2 | Prepreg 3 | Prepreg 2 | Prepreg 4 |
| Resin composition | Resin composition A | Resin composition B | Resin composition B | Resin composition B | Resin composition C |
| | parts by mass | parts by mass | parts by mass | parts by mass | parts by mass |
| AER4152 | 29 | 29 | 29 | 29 | 31 |
| EPPN-502H | 16 | 16 | 16 | 16 | 17 |
| EXA1514 | 22 | 22 | 22 | 22 | 23 |
| JER828 | 33 | 33 | 33 | 33 | 30 |
| YP-70 | 4 | 4 | 4 | 4 | 4 |
| DY9577 | 6 | | | | |
| Dicy | | 5 | 5 | 5 | |
| DCMU | | 3 | 3 | 3 | |
| 2MA-OK | | | | | 4 |
| L-07N | | | | | 2 |
| Cured resin: G'-Tg (°C) | 147 | 159 | | | 177 |
| Cured resin: tanδmax (°C) | 171 | 176 | | | 209 |
| Composite: G'-Tg (°C) | 154 | 121 | 139 | 132 | 34 |
| Composite: tanδmax (°C) | 176 | 764 | 170 | 166 | 55 |
| Molding method | Oven | Oven | Oven | Autoclave | Oven |
| fiber base material | TRK510 | TRK510 | TRK510 | TRK510 | TRK510 |
| Sections of fiber base material without resin impregnation | Numerous | Numerous | Few | Numerous | Numerous |

### Example 2

A sample was cut out from the cured resin sheet of resin composition A obtained in the same manner as Example 1, and the Tg was measured by DSC. The results are shown in Table 3.

### Example 3

Resin composition D was obtained by mixing jER828 and DY9577 at room temperature in the composition shown in Table 3. The obtained resin composition was placed in an aluminum dish and subjected to heat curing in an oven at 150°C for 2 hours to obtain a cured resin. A sample was cut out from the obtained cured resin, and the Tg was measured by DSC. The results are shown in Table 3.

### Examples 4-8

Resin compositions E, F, G, H and I were prepared by the same procedure as Example 3, except for changing the compositions as shown in Table 3, and the Tg of each was measured by DSC. The results are shown in Table 3.

### Example 9

Resin composition J was obtained by mixing jER828 with jER1001 and D9577 in the composition shown in Table 3 at 70°C, and defoaming the mixture. Resin composition J was sandwiched by two release-treated glass plates via 2 mm-thick spacers, and subjected to heat curing in an oven at 150°C for 2 hours, to obtain a 2 mm-thick cured resin sheet. A sample was cut out from the obtained cured resin sheet, and the Tg was measured by DSC. The results are shown in Table 3.

### Example 10

Resin composition K was prepared by the same procedure as Example 9, except for changing the compositions as shown in Table 3, and the Tg of each was measured by DSC. The results are shown in Table 3.
As shown in Tables 2 and 3, each of the prepregs of the invention exhibited the original Tg of the matrix resin. With the prior art, as in Comparative Examples 1-4, the original Tg of the matrix resin could not be exhibited.

**[Table 3]**

| Table 3 | | | | | | | | | |
|---|---|---|---|---|---|---|---|---|---|
| | Example 2 | Example 3 | Examples 4 | Example 5 | Example 6 | Example 7 | Example 8 | Example 9 | Example 10 |
| | Resin composition A | Resin composition D | Resin composition E | Resin composition F | Resin composition G | Resin composition H | Resin composition I | Resin composition J | Resin composition K |
| | parts by mass | parts by mass | parts by mass | parts by mass | parts by mass | parts by mass | parts by mass | parts by mass | parts by mass |
| AER4152 | 29 | | | | | | | | |
| EPPN-502H | 16 | | | | | | | | |
| EXA1514 | 22 | | | | | | | | |
| JER828 | 33 | 100 | 100 | 100 | 100 | 100 | 100 | 40 | 40 |
| JER1001 | | | | | | | | 60 | 60 |
| YP-70 | 4 | | | | | | | | |
| DY9577 | 6 | 3 | 5 | 7 | 9 | 11 | 13 | 7 | 12 |
| Epoxy equivalents of epoxy resin (g/eq) | 244 | 189 | 189 | 189 | 189 | 189 | 189 | 296 | 296 |
| Molar ratio of boron with respect to moles of epoxy groups (%) | 4.7 | 1.9 | 3.1 | 4.4 | 5.7 | 6.9 | 8.2 | 6.9 | 11.8 |
| Cured resin Tg, by DSC (°C) | 164 | 72 | 114 | 139 | 137 | 134 | 118 | 132 | 112 |

### Example 11

Resin composition L was obtained by the same procedure as for preparation of resin composition A, except for changing the composition as shown in Table 4. A TRK510 material by Mitsubishi Rayon Co., Ltd. was prepared as the fiber base material. With the basis weight of the resin film set for a resin content of 45 mass% in the prepreg, resin composition L was coated onto a release sheet with a film coater under 60°C conditions, to obtain a resin film. The obtained resin film was attached by hand onto both sides of the fiber base material, to obtain prepreg 5. The resin content of the prepreg was 45 mass%. Upon cutting the obtained prepreg and visually observing the cross-section, interior sections without impregnation of the resin were seen. The obtained prepreg was laminated along the warp yarn direction, and the laminated body was bagged with the construction shown in Fig. 1. Also, a vacuum pump was connected to the pull opening for 12 hours of preliminary deaeration at room temperature. The bagged laminated body was placed in an oven and subjected to heat curing at 95°C for 1 hour and then to heat curing at 150°C for 2 hours, with the vacuum pump connected to the pull opening for deaeration, to obtain a panel.
A test piece was cut out from the obtained panel, the G'-Tg and tanδmax were measured by DMA, and the composite interlaminar shear strength and composite flexural strength and elastic modulus were also measured. The results are shown in Table 4. An ARES-RDA was used for the DMA measurement.

### Example 12

The same procedure was carried out as in Example 11, except for changing the composition as shown in Table 4, and a prepreg 6 and panel were obtained from the resin composition M. A test piece was cut out from the obtained panel, the G'-Tg and tanδmax were measured by DMA, and the composite interlaminar shear strength and composite flexural strength and elastic modulus were also measured. The results are shown in Table 4. An ARES-RDA was used for the DMA measurement.

### Example 13

The same procedure was carried out as in Example 11, except for changing the composition as shown in Table 4, and a prepreg 7 and panel were obtained from the resin composition N. A test piece was cut out from the obtained panel, the G'-Tg and tanδmax were measured by DMA, and the composite interlaminar shear strength and composite flexural strength and elastic modulus were also measured. The results are shown in Table 4. An ARES-RDA was used for the DMA measurement.

### Example 14

The same procedure was carried out as in Example 11, except for changing the composition as shown in Table 4, and a prepreg 8 and panel were obtained from the resin composition O. A test piece was cut out from the obtained panel, the G'-Tg and tanδmax were measured by DMA, and the composite interlaminar shear strength and composite flexural strength and elastic modulus were also measured. The results are shown in Table 4. An ARES-RDA was used for the DMA measurement.

**[Table 4]**

| Table 4 | | | | |
|---|---|---|---|---|
| | Example 11 | Example 12 | Example 13 | Example 14 |
| | Prepreg 5 | Prepreg 6 | Prepreg 7 | Prepreg 8 |
| Resin composition | Resin composition L | Resin composition M | Resin composition N | Resin composition O |
| | parts by mass | parts by mass | parts by mass | parts by mass |
| AER4152 | 29 | 29 | 29 | 29 |
| EPPN-502H | 16 | 16 | 16 | 16 |
| EXA1514 | 22 | 22 | 22 | 22 |
| ER828 | 33 | 33 | 33 | 33 |
| YP-70 | 4.0 | 4.0 | 4.0 | 4.0 |
| DY9577 | 4.0 | 5.6 | 8.9 | 10.0 |
| Molar ratio of boron with respect to moles of epoxy groups (%) | 3.1 | 4.4 | 7.0 | 7.8 |
| Cured resin: G'-Tg (°C) | 140 | 143 | 150 | 149 |
| Cured resin: tanδmax (°C) | 156 | 159 | 172 | 172 |
| Composite: G'-Tg (°C) | 142 | 144 | 153 | 155 |
| Composite: tanδmax (°C) | 160 | 164 | 177 | 177 |
| Composite: Interlayer shear strength (MPa) | 50 | 45 | 47 | 42 |
| Composite: Flexural strength (MPa) | 960 | 740 | 950 | 700 |
| Composite: Flexural modulus (GPa) | 59 | 58 | 58 | 58 |
| Molding method | Oven | Oven | Oven | Oven |
| Fiber base material | TRK510M | TRK510M | TRK510M | TRK510M |
| Sections of fiber base material without resin impregnation | Numerous | Numerous | Numerous | Numerous |

As shown in Table 4, each of the prepregs of the invention exhibited the original G'-Tg of the matrix resin.

### Examples 15 and 16, Comparative Examples 5 and 6

Table 5 below shows the resin composition starting materials and fiber materials used in Examples 15 and 16 and Comparative Examples 5 and 6.

**[Table 5]**

| Table 5 | | |
|---|---|---|
| | Abbreviated name | Description |
| Material A | jER828 | "jER828" by Japan Epoxy Resins: epoxy equivalents = 189 g/eq |
| | AER4152 | "AER4152" by Asahi Kasei Chemicals: epoxy equivalents = 340 g/eq |
| | EPPN-502H | "EPPN-502H" by Nippon Kayaku: epoxy equivalents = 169 g/eq |
| | EXA1514 | "EPICLON EXA1514" by DIC: epoxy equivalents = 310 g/eq |
| Material B | DY9577 | Boron chloride-amine complex "DY9577" by Huntsman: boron content = 3.6 mass% |
| Material C | TRK510 | Carbon fiber woven fabric "TRK510" by Mitsubishi Rayon: Fiber basis weight = 646 g/m² |
| Other | YP-70 | Phenoxy resin, "PHENOTOTO YP-70" by Tohto Kasei: epoxy equivalents = 14000 g/eq |

### Preparation of resin composition P

A master batch was prepared by dissolving jER828 and YP-70 at 160°C in a glass flask. For the master batch, the components other than DY9577 in the composition shown in Table 6 were mixed at 120°C. The mixture was adjusted to 60°C, and then a prescribed amount of DY9577 was added and mixed therewith to prepare resin composition P.

**[Table 6]**

| Table 6 | |
|---|---|
| Resin composition | Resin composition P |
| AER4152 | 29 |
| EPPN-502H | 16 |
| EXA1514 | 22 |
| jER828 | 33 |
| YP-70 | 4.0 |
| DY9577 | 8.9 |

### Confirmation of composite outer appearance

The presence or absence of voids in the surface of the fiber-reinforced composite material panel was visually confirmed.

### Measurement of Tg by DMA

The cured resin sheet and a fiber-reinforced composite material panel (composite) were worked into test pieces (50 mm length x 12 mm width, cured resin sheet thickness: 2 mm, fiber-reinforced composite material thickness: 2.8 mm). For the composite, the test piece was worked so that the lengthwise direction matched the warp yarn direction of the reinforcing fibers. The measuring apparatus used was an ARES-RDA by TA Instruments. The measurement was conducted at a measuring frequency of 1 Hz, with temperature increase of 5°C/min. The logG' was plotted against temperature, and G'-Tg was recorded as the temperature determined from the intersection between an approximate straight line in the flat region before transition of logG', and an approximate straight line on the region of transition of G'. Also, tanδ was plotted against temperature, and the temperature showing maximum tanδ was recorded as tanδmax.

### Example 15

A TRK510 material by Mitsubishi Rayon Co., Ltd. was prepared as the fiber base material. With the basis weight of the resin film set for a resin content of 45 mass% in the prepreg, resin composition P was coated onto a release sheet with a film coater under 60°C conditions, to obtain a resin film. The obtained resin film was attached onto both sides of the fiber base material, and passed through a fusing press (JR-600S, product of Asahi Corp., processing length: 1340 mm, pressure: cylinder pressure) under conditions with a temperature of 40°C, a pressure of 0.05 MPa and a feed rate of 1.6 m/min, to obtain prepreg 9. The resin content of the prepreg was 45 mass%. Upon cutting the obtained prepreg and visually observing the cross-section, interior sections without impregnation of the resin were seen. The obtained prepreg was laminated along the warp yarn direction, and the laminated body was bagged with the construction shown in Fig. 1. Also, a vacuum pump was connected to the pull opening for 4 hours of preliminary deaeration at room temperature. The bagged laminated body was placed in an oven and subjected to dual curing at 95°C for 1 hour and then to heat curing at 150°C for 2 hours, with the vacuum pump connected to the pull opening for deaeration, to obtain a composite. The temperature increase was 1°C/min.
Table 7 shows the results of visually examining the outer appearance of the obtained composite, and of Tg measurement by DMA of a test piece cut out from the obtained composite.

### Example 16

Table 7 shows the results of examining the outer appearance of a composite obtained by the same procedure as Example 15, except for changing the dual curing temperature to 60°C.
Table 7 also shows the results of Tg measurement by DMA of a test piece cut out from the obtained composite.

### Comparative Example 5

Table 7 shows the results of examining the outer appearance of a composite obtained by the same procedure as Example 15, except for changing the dual curing temperature to 100°C.
Table 7 also shows the results of Tg measurement by DMA of a test piece cut out from the obtained composite.
Resin composition P was also heated to 60°C for defoaming, and then resin composition P was sandwiched by two release-treated glass plates via 2 mm-thick spacers, and subjected to dual curing at 100°C for 1 hour followed by heat curing at 150°C for 2 hours in an oven, to obtain a cured resin sheet. The temperature increase was 1°C/min.
Table 7 shows the results of Tg measurement by DMA of a test piece cut out from the obtained cured resin sheet.

### Comparative Example 6

Table 7 shows the results of examining the outer appearance of a composite obtained by the same procedure as Example 15, except for changing the dual curing temperature to 50°C.
Table 7 also shows the results of Tg measurement by DMA of a test piece cut out from the obtained composite.

**[Table 7]**

| Table 7 | | | | |
|---|---|---|---|---|
| | Example 15 | Example 16 | Comp. Example 5 | Comp. Example 6 |
| Dual curing temperature (°C) | 95 | 60 | 100 | 50 |
| Composite G'-Tg (°C) | 153 | 154 | 121 | 154 |
| Composite tanδ (°C) | 175 | 176 | 169 | 175 |
| Cured resin sheet G'-Tg (°C) | - | - | 156 | - |
| Cured resin sheet tanδ (°C) | - | - | 181 | - |
| Composite appearance | No voids | No voids | No voids | Voids |

As seen in Table 7, the method for producing a fiber-reinforced composite material according to the second feature of the invention can yield a fiber-reinforced composite material having a satisfactory outer appearance and exhibiting the original heat resistance of the resin composition.

### Reference Example

Resin composition P was heated to 60°C for defoaming, and then resin composition P was sandwiched by two release-treated glass plates via 2 mm-thick spacers, and subjected to heat curing in an oven at 150°C for 2 hours, to obtain a cured resin sheet. The temperature increase was 1°C/min.
A test piece was cut out from the obtained cured resin sheet, and the original Tg of the resin composition was measured by DMA. The results are shown in Table 8.

**[Table 8]**

| Table 8 | |
|---|---|
| | Reference Example |
| Cured resin sheet G'-Tg (°C) | 150 |
| Cured resin sheet tanδ (°C) | 172 |

### Examples 17 and 18, Comparative Examples 7 and 8

Table 9 below shows the resin composition starting materials and reinforcing fiber base materials used in Examples 17 and 18 and Comparative Examples 7 and 8.

**[Table 9]**

| Table 9 | | |
|---|---|---|
| | Abbreviated name | Description |
| Material A | jER828 | "jER828" by Japan Epoxy Resins: epoxy equivalents = 189 g/eq |
| | jER807 | "jER807" by Japan Epoxy Resins: epoxy equivalents = 168 g/eq |
| | Preliminary reaction product | Resin obtained by prereacting jER828 and diaminodiphenylsulfone at 150°C in a ratio of 100:9 |
| | AER4152 | "AER4152" by Asahi Kasei Chemicals: epoxy equivalents = 340 g/eq |
| | EPPN-502H | "EPPN-502H" by Nippon Kayaku: epoxy equivalents = 169 g/eq |
| | EXA1514 | "EPICLON EXA1514" by DIC: epoxy equivalents = 310 g/eq |
| Material R | DY9577 | Boron chloride-amino complex "DY9577" by Huntsman: boron content = 3.6 mass% |
| Material C | TRK510 | Carbon fiber woven fabric "TRK510" by Mitsubishi Rayon: Fiber basis weight = 646 g/m² |
| Other | YP-70 | Phenoxy resin, "PHENOTOTO YP-70" by Tohto Kasei: epoxy equivalents = 14000 g/eq |
| | Dicy15 | Dicyandiamide, "jERCURE Dicy15" by Japan Epoxy Resins |
| | DCMU | Dichlorophenyldimethylurea, "DCMU99" by Hodogaya Chemical |
| | 2MA-OK | Imidazole, "CURAZOLE 2MA-OK" by Shikoku Chemicals |
| | L-07N | Epoxy-phenol-boric acid ester mixture, "CUREDUCT L-07N" by Shikoku Chemicals |

### Preparation of resin composition Q

A master batch was prepared by mixing jER828, jER807 and DY9577 in the composition shown in Table 10, at room temperature in a glass flask. The master batch was mixed with a preliminary reaction product at 60°C to prepare resin composition Q.

### Preparation of resin composition R

A master batch was prepared by dissolving jER828 and YP-70 at 160°C in a glass flask. For the master batch, the components other than DY9577 in the composition shown in Table 2 were mixed at 120°C. The mixture was adjusted to 60°C, and then a prescribed amount of DY9577 was added and mixed therewith to prepare resin composition R.

### Preparation of resin composition S

A master batch was also prepared by uniformly mixing and dispersing jER828, jER807 and Dicy15 and DCMU in the composition shown in Table 10, using a triple roll mill. The master batch was mixed with a preliminary reaction product at 60°C using a glass flask, to prepare resin composition C.

### Preparation of resin composition T

A master batch was prepared by dissolving jER828 and YP-70 at 160°C in a glass flask. A master batch was also prepared by uniformly mixing and dispersing jER828 with Dicy15 and DCMU using a triple roll mill. The components other than the Dicy15/DCMU master batch in the composition shown in Table 10 were mixed with the YP-70 master batch at 100°C, using a glass flask. The mixture was adjusted to 60°C, and then a prescribed amount of the Dicy15/DCMU master batch was added and mixed therewith to prepare resin composition T.

### Measurement of Tg by DMA

A fiber-reinforced composite material panel obtained by aligning a prepreg in the warp yarn direction and laminating and curing it was worked into a test piece (50 mm length x 12 mm width, thickness: 2.8 mm). The test piece from the obtained panel was worked so that the lengthwise direction matched the warp yarn direction of the reinforcing fibers. The measuring apparatus used was an RDA700 Rheometer by Rheometrix, or an ARES-RDA. The measuring frequency was 1 Hz, and the temperature-elevating rate was 5°C step elevation for the RDA700 and 5°C/min elevation for the ARES-RDA. As the difference between the measuring apparatuses, the measured values by the RDA700 are 1.05-fold higher than the measured values by the ARES-RDA. The logG' was plotted against temperature, and G'-Tg was recorded as the temperature determined from the intersection between an approximate straight line in the flat region before transition of logG', and an approximate straight line on the region of transition of G'. Also, tanδ was plotted against temperature, and the temperature showing maximum tanδ was recorded as tanδmax.

### Example 17

A TRK510 material by Mitsubishi Rayon Co., Ltd. was prepared as the reinforcing fiber base material. With the basis weight of the resin film set for a resin content of 40 mass% in the prepreg, resin composition Q was coated onto a release sheet with a film coater under 60°C conditions, to obtain a resin film. The obtained resin film was attached onto both sides of the reinforcing fiber base material, and passed through a fusing press (JR-600S, product of Asahi Corp., processing length: 1340 mm, pressure: cylinder pressure) under conditions with a temperature of 60°C, a pressure of 0.05 MPa and a feed rate of 1.2 m/min, to obtain prepreg 10. The resin content of the prepreg was 40 mass%. The prepreg 10 was cut, an aluminum honeycomb with edges tapered to a height of 5 mm was placed at the center of the prepreg, and the aluminum honeycomb was covered with the prepreg, to obtain a laminated body as shown in Fig. 2. The laminated body was bagged with the construction shown in Fig. 2. Also, a vacuum pump was connected to the pull opening for 12 hours of preliminary deaeration at room temperature. The bagged laminated body was placed in an autoclave, and the temperature was raised at 2°C/min with a vacuum pump connected to the pull opening for deaeration. Once the temperature reached 80°C, it was maintained for 20 minutes. The temperature was then raised at 3.3°C/min, and upon reaching 130°C, a pressure of 0.3 MPa was applied for heat curing for 90 minutes, to obtain a molded sandwich structure.
The obtained panel was dipped in purified water for 12 hours, and after removal, the water droplets were wiped off and the presence or absence of white spots on the surface was confirmed, yielding the results shown in Table 10.

The obtained prepreg 10 was laminated along the warp yarn direction, and the laminated body was bagged with the construction shown in Fig. 1. Also, a vacuum pump was connected to the pull opening for 6 hours of preliminary deaeration at room temperature. The bagged laminated body was placed in an autoclave, and the temperature was raised at 2°C/min with a vacuum pump connected to the pull opening for deaeration. Once the temperature reached 80°C, it was maintained for 20 minutes. The temperature was then raised at 3.3°C/min, and upon reaching 130°C, a pressure of 0.3 MPa was applied for heat curing for 90 minutes, to obtain a panel.
A test piece was cut out from the obtained panel, and the Tg was measured by DMA. The results are shown in Table 10. An ARES-RDA was used for the DMA measurement. The fiber-reinforced composite material obtained in Example 17 had sufficient heat resistance.

### Example 18

A TRK510 material by Mitsubishi Rayon Co., Ltd. was prepared as the reinforcing fiber base material. With the basis weight of the resin film set for a resin content of 45 mass% in the prepreg, resin composition R was coated onto a release sheet with a film coater under 60°C conditions, to obtain a resin film. The obtained resin film was attached onto both sides of the reinforcing fiber base material, and passed through a fusing press (JR-600S, product of Asahi Corp., processing length: 1340 mm, pressure: cylinder pressure) under conditions with a temperature of 40°C, a pressure of 0.05 MPa and a feed rate of 1.6 m/min, to obtain prepreg 11. The resin content of the prepreg was 45 mass%. Upon cutting the obtained prepreg 11 and visually observing the cross-section, interior sections without impregnation of the resin were seen. The prepreg 11 was cut, an aluminum honeycomb with edges tapered to a height of 5 mm was placed at the center of the prepreg, and the aluminum honeycomb was covered with the prepreg, to obtain a laminated body as shown in Fig. 2. The laminated body was bagged with the construction shown in Fig. 2. Also, a vacuum pump was connected to the pull opening for 12 hours of preliminary deaeration at room temperature. The bagged laminated body was placed in an oven, the temperature was raised at 1°C/min, with a vacuum pump connected to the pull opening for deaeration, and then heat curing was carried out at 95°C for 1 hour and was followed by heat curing at 150°C for 2 hours, to obtain a molded sandwich structure.
The obtained molded sandwich structure was dipped in purified water for 12 hours, and after removal, the water droplets were wiped off and the presence or absence of white spots on the surface was confirmed, yielding the results shown in Table 10.

The obtained prepreg 11 was laminated along the warp yarn direction, and the laminated body was bagged with the construction shown in Fig. 1. Also, a vacuum pump was connected to the pull opening for 12 hours of preliminary deaeration at room temperature. The bagged laminated body was placed in an oven, the temperature was raised at 1°C/min, with a vacuum pump connected to the pull opening for deaeration, and then heat curing was carried out at 95°C for 1 hour and was followed by heat curing at 150°C for 2 hours, to obtain a panel.
A test piece was cut out from the obtained panel, and the Tg was measured by DMA. The results are shown in Table 10. An ARES-RDA was used as the measuring apparatus. The fiber-reinforced composite material obtained in Example 18 had sufficient heat resistance.

### Comparative Example 7

A prepreg 12 was obtained by the same procedure as Example 17, except for using resin composition S. Next, a molded sandwich structure was obtained by the same procedure as Example 17, except for using the prepreg 12.
The obtained molded sandwich structure was dipped in purified water for 12 hours, and after removal, the water droplets were wiped off and the presence or absence of white spots on the surface was confirmed, yielding the results shown in Table 10.

The prepreg 12 was laminated along the warp yarn direction, and the laminated body was bagged with the construction shown in Fig. 1. Also, a vacuum pump was connected to the pull opening for 12 hours of preliminary deaeration at room temperature. The bagged laminated body was placed in an autoclave, and the temperature was raised at 2°C/min with a vacuum pump connected to the pull opening for deaeration. Once the temperature reached 80°C, it was maintained for 20 minutes. The temperature was then raised at 3.3°C/min, and upon reaching 130°C, a pressure of 0.3 MPa was applied for heat curing for 90 minutes, to obtain a panel.
A test piece was cut out from the obtained panel, and the Tg was measured by DMA. The results are shown in Table 10. An ARES-RDA was used for the DMA measurement.

### Comparative Example 8

A prepreg 13 was obtained by the same procedure as Example 18, except for using resin composition T. Next, a molded sandwich structure was obtained by the same procedure as Example 18, except for using the prepreg 13.
The obtained molded sandwich structure was dipped in purified water for 12 hours, and after removal, the water droplets were wiped off and the presence or absence of white spots on the surface was confirmed, yielding the results shown in Table 10.

The prepreg 13 was laminated along the warp yarn direction, and the laminated body was bagged with the construction shown in Fig. 1. Also, a vacuum pump was connected to the pull opening for 12 hours of preliminary deaeration at room temperature. The bagged laminated body was placed in an oven, the temperature was raised at 1°C/min, with a vacuum pump connected to the pull opening for deaeration, and then heat curing was carried out at 95°C for 1 hour and was followed by heat curing at 150°C for 2 hours, to obtain a panel.
A test piece was cut out from the obtained panel, and the Tg was measured by DMA. The obtained results are shown in Table 10. An RDA700 was used as the measuring apparatus.

**[Table 10]**

| Table 10 | | | | | |
|---|---|---|---|---|---|
| | | Example 17 | Example 18 | Comp. Ex. 7 | Comp. Ex. 8 |
| | | Resin composition Q | Resin composition R | Resin composition S | Resin composition T |
| | | Prepreg 10 | Prepreg 11 | Prepreg 12 | Prepreq 13 |
| Preliminary reaction product | (parts by mass) | 93 | | 93 | |
| AER4152 | (parts by mass) | | 29 | | 29 |
| EPPN-502H | (parts by mass) | | 16 | | 16 |
| EXA1514 | (parts by mass) | | 22 | | 22 |
| jER828 | (parts by mass) | 3.5 | 33 | 3.5 | 33 |
| jER807 | (parts by mass) | 3.5 | | 3.5 | |
| YP-70 | (parts by mass) | | 4 | | 4 |
| DY9577 | (parts by mass) | 9 | 5.6 | | |
| Dicy15 | (parts by mass) | | | 1.5 | 5 |
| DCMU | (parts by mass) | | | 3 | 3 |
| Fiber base material | - | TRK510 | TRK510 | TRK510 | TRK510 |
| Molded sandwich structure white spots | - | Absent | Absent | Present | Present |
| Fiber-reinforced composite material | | | | | |
| G'-Tg | (°C) | 124 | 154 | 127 | 132 |
| Tanδmax | (°C) | 149 | 176 | 147 | 166 |

As shown in Table 10, the molded sandwich structure according to the third feature of the invention, and the method for producing it, can provide a molded sandwich structure with no white spots generated on the surface even when wetted with water.

### Industrial Applicability

The invention is industrially useful since it can provide fiber-reinforced resin molded articles with excellent performance.

### Explanation of Symbols

The symbols in the accompanying Figs. 1 and 2 are as follows.
- 1: Nonwoven fabric
- 2: Pull opening
- 3: Sealant
- 4: Tool
- 5: Laminated body
- 6: Nylon bag film
- 7: Pressure plate
- 8: Releasable film
- 9: Aluminum honeycomb

## Claims

1. A prepreg comprising an epoxy resin (A), a boron chloride-amine complex (B) and a fiber base material (C).

2. A prepreg according to claim 1, wherein the molar ratio of boron in the boron chloride-amine complex (B) with respect to the number of moles of epoxy groups in the epoxy resin (A) is 4-7 mol%.

3. A prepreg according to claim 1 or 2, wherein the epoxy resin (A) comprises a bifunctional epoxy resin with an oxazolidone ring structure represented by the following formula (I) (1), a bisphenol-type epoxy resin (2) and a phenol-novolac-type epoxy resin represented by the following formula (II) (3).

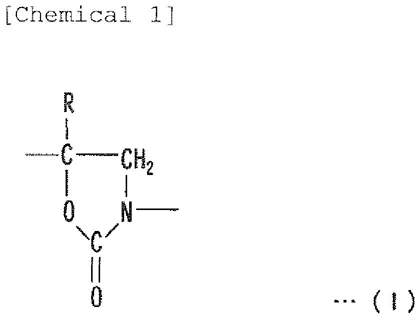

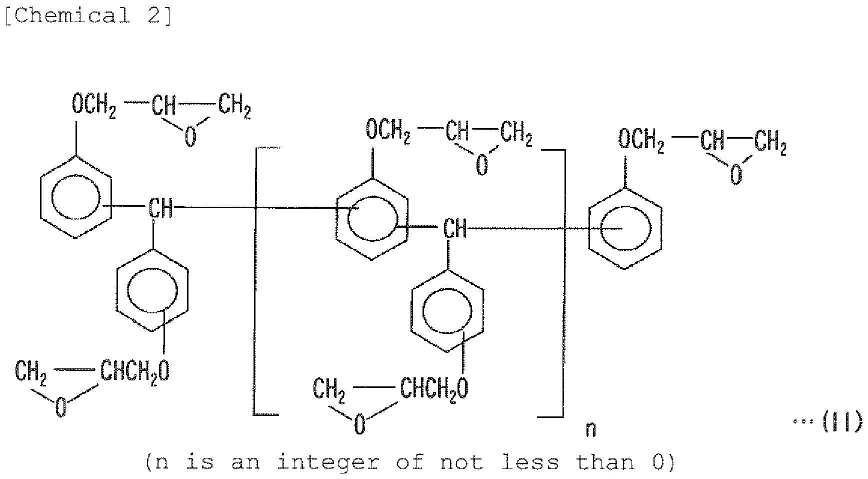

4. A fiber-reinforced composite material obtained by curing a prepreg according to any one of claims 1 to 3.

5. A method for producing a fiber-reinforced composite material, which comprises holding a prepreg comprising a resin composition, that includes an epoxy resin (A) and a boron chloride-amine complex (B), and a fiber base material (C), at 60°C-95°C for 0.5-1.5 hours during its molding, and then curing it at the curing temperature of the resin composition.

6. The method for producing a fiber-reinforced composite material according to claim 5, wherein the epoxy resin (A) comprises a bifunctional epoxy resin with an oxazolidone ring structure represented by formula (I) of claim 3 (1), a bisphenol-type epoxy resin (2) and a phenol-novolac-type epoxy resin represented by formula (II) of claim 3 (3).

7. A molded sandwich structure comprising a skin material and a core material, wherein the skin material comprises an epoxy resin (A), a boron chloride-amine complex (B) and a reinforcing fiber base material (C).

8. A method for producing a molded sandwich structure comprising a skin material and a core material, the method comprising laminating a core material and a prepreg comprising an epoxy resin (A), a boron chloride-amine complex (B) and a reinforcing fiber base material (C), and then hot pressing it to cure the prepreg.
